# EUROPÄISCHE PATENTANMELDUNG

(11) **EP 2 287 507 A2**
(43) Veröffentlichungstag der Anmeldung: **23.02.2011**
(21) Anmeldenummer: 10157022.4
(22) Anmeldetag: 19.03.2010
(51) Int. Cl.: F16L 9/19, F28D 7/10, F02M 25/07

(54) **Doppelwandiges Rohr, Verfahren zu seiner Herstellung und seine Verwendung**

(30) Priorität: 07.07.2009 DE 102009032045
(71) Anmelder: ELB-Form GmbH, 6773 Vandans (AT)
(72) Erfinder: Reiner, Markus, 6700 Bludenz (AT)
(74) Vertreter: Neidl-Stippler, Cornelia

(57) **Zusammenfassung**

Die Erfindung betrifft ein doppelwandiges Rohr (10) mit: einem Rohrmantel (11) mit einer Außenwand (12) und einer Innenwand (14) sowie dazwischen parallel zueinander verlaufenden Kanälen (19), wobei der Rohrmantel (11) aus einem Außen- und einem Innenrohr besteht, von denen mindestens eines in Rohrinnenrichtung Erhebungen (15, 16) aufweist, wobei durch Übereinanderliegen derselben parallel verlaufenden Mantelkanäle gebildet (19) sind, Verfahren zu seiner Herstellung und seine Verwendung zum Wärmeaustausch.

## Beschreibung

Die Erfindung betrifft ein doppelwandiges Rohr, Verfahren zu seiner Herstellung und seine Verwendung zum Wärmeaustausch und Abführung derselben aus/in Rohrleitungen.

Rohrleitungen im Sinne der vorliegenden Erfindung sind ummantelte Räume mit gegenüber ihrer Längsabmessung kleinen Querabmessungen (Lüftungskanäle, Abgasrohre, Heizungen; Klimaanlagenteile etc.).

Wärmeaustausch über Rohrwärmetauscher ist bekannt. Dazu werden in einem gut wärmeleitenden Material Fluide - bevorzugt im Gegenstrom zueinander - geführt, wobei das wärmere Fluid über die gemeinsame Trennwand Wärme an das kältere Fluid abgibt und so gekühlt wird, während das erwärmte Fluid die Wärme abführt und bspw. in einen Speicher oder zu anderen nutzbringenden Verwendungen führt. Dadurch kann eine Überhitzung der Anlage vermieden sowie überschüssige HeizEnergie gewonnen werden.

Meist wird bei exothermen Reaktionen, wie Verbrennungen in Motoren, die entstehende Wärme nur rudimentär oder gar nicht genutzt. Ferner sind hohe Temperaturen, wie Abgastemperaturen, schädlich für die Umgebung und müssen schnell abgesenkt werden.

Eine bevorzugte Verwendung des doppelwandigen Rohrs ist als Wärmetauscherrohr. Typischerweise eignen sich solche Rohre als Abgasrohre für Verbrennungsmotoren, sind aber auch als Ladeluftrohre für Turboladermotoren geeignet

Doppelwandige Rohre sind bereits zu diesem Zweck bekannt, haben aber verschiedene Nachteile. Die bekannten doppelwandigen Rohre haben unter anderem den Nachteil, daß sie kaum oder gar nicht gebogen werden können und wegen der an ihnen zu befestigenden Fluid- Zu- und Abführeinrichtungen viel Platz beanspruchen.

Es ist daher Aufgabe der Erfindung, ein doppelwandiges Rohr mit guten Wärmeübertragungseigenschaften bei günstiger Herstellung zu schaffen.

Die Aufgabe wird durch ein doppelwandiges Rohr mit einem Rohrmantel mit einem Außenrohr und einem Innenrohr nach Patentanspruch1 mit dazwischen parallel zueinander verlaufenden Kanälen gelöst; ferner durch ein doppelwandiges Rohr mit Sammelraum nach Patentanspruch 2. Schließlich. Ferner bezieht sich die Erfindung auch auf ein Verfahren mit den Merkmalen des Patentanspruches 7 sowie seine Verwendung nach Patentanspruch 13. Vorteilhafte Weiterbildungen ergeben sich aus den abhängigen Ansprüchen.

Es ist dabei günstig, wenn die Kanäle durch am Außenrohr zumindest an seiner Innenseite ausgebildete Erhebungen-wie Rippen, Wellen, Finnen aufweisen, die auf der Innenseite des Außenrohrs als Begrenzungen der Kanäle an der Außenweite des Innenrohrs anschließen. So werden durch diese Erhebungen geschlossene Kanäle gebildet.

Weiterhin bezieht sich die Erfindung auf ein doppelwandiges Rohr mit Kanälen im Rohrmantel und Sammelraum für die Mantelfluidführung, das nicht notwendigerweise aus zwei Rohren hergestellt sein muß, sondern auch einstückig stranggepreßt sein kann. Dazu können in mindestens einem Endbereich des doppelwandigen Rohrs die Kanalwände zumindest teilweise entfernt sein. Dies kann durch Bohren, Drücken, Schneiden und andere dem Fachmann geläufige Maßnahmen bei einstückigen Rohren erfolgen, bei der Herstellung von doppelwandigen Rohren aus Außen- und Innenrohr bspw. durch entsprechende Wahl eines kürzeren Innenrohrs oder Abschneiden des Innenrohrs beim Umformen. Dadurch münden die Kanäle um Rohrmantel gemeinsam im Sammelraum. Zur Herstellung eines Sammelraums am mindestens einen Rohrende wird der Rohrmantel im durch Verbinden von Außen-und Innenrohr am Rohrende geschlossen. An dem Sammelraum kann dann ein Fluidzugang für das Mantelfluid angeschlossen werden.

Dadurch kann Fluid zu- bzw. abgeführt werden. Durch diese Ausführungsform kann das nachträgliche Befestigen aufwendiger Sammeleinrichtungen am Rohr vermieden werden und Raumersparnis erzielt werden.

Erfindungsgemäß können das Innen- und Außenrohr jeweils ausgewählt sein aus der Gruppe bestehend aus: einem Rohr mit innenliegenden Erhebungen, Rohren mit außenliegenden Erhebungen und Rohren mit Innen- und Außenerhebungen.

Durch Erhebungen auf dem Rohrmantel, die sich ins Innere des Rohrs oder aber auch vom Rohräußeren hinweg erstrecken - ist eine bessere Wärmeaufnahme aus dem Rohrinneren bzw. bessere Wärmeabgabe vom Rohraußenmantel möglich.

Die innenliegenden Erhebungen dienen der Ausbildung der im Mantel parallel zueinander verlaufenden Kanäle. Durch diese Kanäle kann Fluid, wie Gas, aber auch Flüssigkeit oder Dampf geführt werden, welches sodann Wärme aufnimmt.

Das doppelwandige Rohr kann aber auch dadurch gebildet sein, daß das Innen-und/oder Außenrohr in Richtung der Kanäle rillenartige Vertiefungen zur Aufnahme von Erhebungen des jeweils anderen Rohrs aufweist. Durch Eingreifen der Erhebungen oder Finnen in die Rillen kann eine gute Verbindung zwischen Innen- und Außenrohr erzielt werden, wenn das Außenrohr durch IHU an die Werkzeugkontur angelegt wird.

Das erfindungsgemäße doppelwandige Rohr kann bspw. eine glatte Innen- und Außenoberfläche haben - derartige Rohre sind mechanisch hoch beanspruchbar und einfach herzustellen.

Es kann aber auch ein doppelwandiges Rohr mit einer Innenwand mit Erhebungen und glatter Außenmantel erstellt werden - dies hat den Vorteil, dass die Erhebungen auf dem Innenmantel eine größere Wärmetausch-Fläche mit dem im Rohr geführten Fluid haben und somit zu intensiverem Wärmeaustausch führen. Solche Rohre eignen sich besonders zu schnellem Kühlen bei geringer Baugröße des Wärmetauschers.

Bei sehr hohen Anforderungen an die Wärmeaustauschkapazität kann auch ein doppelwandiges Rohr mit Erhebungen auf dem Innenmantel und Außenmantel vorgesehen werden, welches bei kleinem Bauraum hohe Wärmeabfuhr aus dem Rohrinneren bzw. schnelle Erwärmung der Umgebung ermöglicht.

In jedem Fall sorgen die Erhebungen auf dem Rohrmantel für eine größere Wärmeübergabefläche, ggf. auch turbulenteren Fluß im Rohrinneren und damit effektiverem Wärmeaustausch.

Typischerweise kann das doppelwandige Rohr hergestellt sein aus einem Außenrohr und einem Innenrohr, jeweils aus duktilem Material, ausgewählt aus der Gruppe bestehend aus: Metall-Legierungen, Kupfer, Eisenlegierungen, Leichtmetall-Legierungen, Silber, alle Vorgenannten auch oberflächenbehandelt, oberflächenbeschichtet. Eine Oberflächenbeschichtung kann bspw. ein (Hart)Lotmaterial, korrosionsinhibierende, mechanisch widerstandsfähig sein oder katalytische Eigenschaften haben.

Für spezielle Anwendungen können aber auch Kunststoff oder Kombinationen von Kunststoff und Metall oder aber Verbundmaterialien eingesetzt werden, je nach Einsatz. So können Rohrleitungen durch dem Fachmann geläufige Materialwahl so ausgelegt werden, dass sie auch in Rohrleitungen, durch die z.T. auch mit korrosiven Stoffen verunreinigte Gasgemische geleitet werden, hohe Standzeiten besitzen.

Es ist aber auch möglich, daß das Innen- und Außenrohr aus unterschiedlichem Material bestehen - insbesondere, wenn an eines der beiden Rohre andere Anforderungen hinsichtlich Temperaturresistenz, mechanische Stabilität etc. gestellt sind. Durch entsprechende Materialauswahl kann bspw. die Wärmeableitung nach Außen bei isolierendem/schlecht leitendem Außenrohrmaterial verringert werden, während durch Einsatz eines gut wärmeleitenden Materials im Innenrohr der Wärmeübergang verbessert wird.

Gleiche Materialien sind aufgrund gleicher Wärmeausdehnungskoeffizienten, Entsorgbarkeit etc. günstig, während verschiedene Materialien den Anforderungen nach guter Wärmeübergangszahl, hohe Duktilität, mechanische Beanspruchbarkeit, chemische Widerstandsfähigkeit etc. besonders gut erfüllen können.

Es kann vorgesehen werden, daß die Kanäle an den Rohrenden mit einem Sammelraum verbunden sind. Bei einer bevorzugten Ausführungsform ist der Sammelraum im Mantel des Rohrs eingeformt. An den Enden des doppelwandigen Rohrs können ferner Anschlußstücke für das im Rohrinneren zu fördernde Fluid angebracht werden.

Je nach Einsatz ist dem Fachmann offensichtlich, welche Kombination für den jeweiligen Anwendungszweck geeignet ist.

Einstückige Doppelmantel-Rohre mit Kanälen im Mantel sind bspw. durch Strangpressen herstellbar.

Erfindungsgemäße mehrteilige Rohre sind herstellbar, indem in ein Profilrohr, das im wesentlichen das Profil des Außenrohrs aufweist, ein Profilrohr, das im wesentlichen das Profil des Innenrohrs aufweist, eingebracht wird, diese Anordnung in eine IHU-Form eingelegt und mittels IHU das Außenrohr an die Werkzeugkontur angelegt wird; ggf. Verbinden der Kontaktbereiche durch Hartlöten und Entformen des doppelwandigen Rohrs.

Unter IHU werden Innenhochdruckverfahren verstanden, wie sie dem Fachmann bekannt sind. Dabei wird Fluid unter hohem Druck gegen eine Wand gedrückt, die sich an eine außenliegende Form anpaßt und so umgeformt wird. Das IHU hat unter anderem den Vorteil, daß komplexe Formen unproblematisch herstellbar sind.

Die Anordnung der beiden Rohre ineinander kann so erfolgen, daß ein Innenrohr mit Außenprofil gerichtet im Außenrohr mit Innenprofil so eingelegt wird, dass die jeweiligen Erhebungen auf dem jeweils anderen Rohr aufliegen. Dadurch können große Kanäle erzielt werden, da die Höhen der beiderseitigen Erhebungen sich addieren.

Es kann auch ein Innenrohr mit im wesentlichen glatter Außenfläche eingebracht und dann mittels IHU am Außenrohr angelegt werden. Die so entstehenden Kontaktstellen können dann verbunden werden.

Die einzusetzenden Profilrohre sind bspw. als Strangpreßrohre herstellbar. Strangpressen ist ein für duktile Materialien bekanntes Verfahren und dem Fachmann geläufig. Dabei können die Erhebungen/Rippen parellel zur Rohrlängsachse, aber auch gewendelt, hergestellt werden, wodurch eine den Wärmetausch fördernde Turbulenz des darin geführten Mediums begünstigt wird.
Die Erfindung kann jedoch auch Rohre einsetzen, die nach anderen Verfahren hergestellt wurden und ist keinesfalls auf stranggepreßte Rohre eingeschränkt.

Zur Herstellung eine mehrteiligen Rohrs wird ein Innenrohr mit Außenprofil gerichtet im Außenrohr mit Innenprofil so eingelegt, dass beim IHU-Umfomen Erhebungen auf einem Rohr in Vertiefungen im anderen Rohr dichtend eingedrückt werden.

Ein Verfahren zur Herstellung eines Sammelzugangs/abgangs am Wärmetauscherrohr weist auf, daß in mindestens einem Endbereich des doppelwandigen Rohrs die Kanäle durch Herausnehmen/Entfernen der Kanalwände miteinander zu einem Sammelraum verbunden werden, wenn der Mantel zum Sammelraum durch Verbinden von Außen- und Innenrohr am Rohrende geschlossen wird. An diesem Sammelraum kann in an sich bekannter Weise ein Fluidzugang angeschlossen werden.

Eine weitere Anschlußkomponente für das Rohrfluid - bspw. für Zuführleitungen - kann am Endbereich des doppelwandigen Rohrs befestigt werden.

Die bevorzugte Verwendung des Wärmetauscherrohrs ist als Heiz- oder Kühlrohr. Besonders günstig ist auch, dass das erfindungsgemäße doppelwandige Rohr mittels IHU umgeformt und somit an ungünstige Raumverhältnisse angepaßt werden kann.

Dazu können bspw. Kanäle an den Rohrenden abgeschlossen und mit einem Anschlußteil verbunden sein.

Dadurch, daß das doppelwandige Rohr aus Strangpressen und Innenhochdruckumformen hergestellt wird, ist es aufgrund des IHU möglich, auch in längere gebogene doppelwandige Rohre vorzusehen, ohne Krümmungen aufwendig in gebogene Rohrleitungen beidseitig einschweissen zu müssen.

Im folgenden werden Ausführungsbeispiele erfindungsgemäßer doppelwandiger Rohre anhand der Zeichnung beispielhaft erläutert. Dabei zeigen
Fig. 1a - 1b schematisch verschiedene doppelwandige Rohre
Fig. 2a - 2c schematisch Innenrohre für das doppelwandige Rohr
Fig. 3a - b schematisch Außenrohre für das doppelwandige Rohr
Fig. 4 schematisch einen Querschnitt durch eine weitere Ausführungsform eines zweiteiligen doppelwandigen Rohrs
Fig. 5 perspektivisch einen Querschnitt durch einen Abschnitt eines doppelwandigen Rohrs;
Fig. 6 den Querschnitt der Fig.5 nach Vorbereitung für das Anbringen des Anschlußteils;
Fig. 7 Einbringen des Anschlußteils in das vorbereitete doppelwandige Rohr der Fig. 6
Fig. 8a eine perspektivische Anschicht eines doppelwandigen Rohrs mit angeschweißtem Anschlußteil und Anschluß für Mantelkanäle;
Fig. 8b einen Längschnitt durch die Anordnung der Fig. 8 a;
Fig. 9 ein Flussdiagramm eines Verfahrens zur Herstellung eines doppelwandiges Rohr
Fig. 10 ein Flussdiagramm eines alternativen Verfahrens zur Herstellung eines doppelwandigen Rohrs; und
Fig. 11 ein Flussdiagramm einer weiteren Verfahrensvariante zur Herstellung eines doppelwandigen Rohrs ; und
Fig. 12 ein Flußdiagramm eines Verfahrens zur Herstellung eines doppelwandigen Rohrs mit Sammelräumen und Fluidanschlüssen

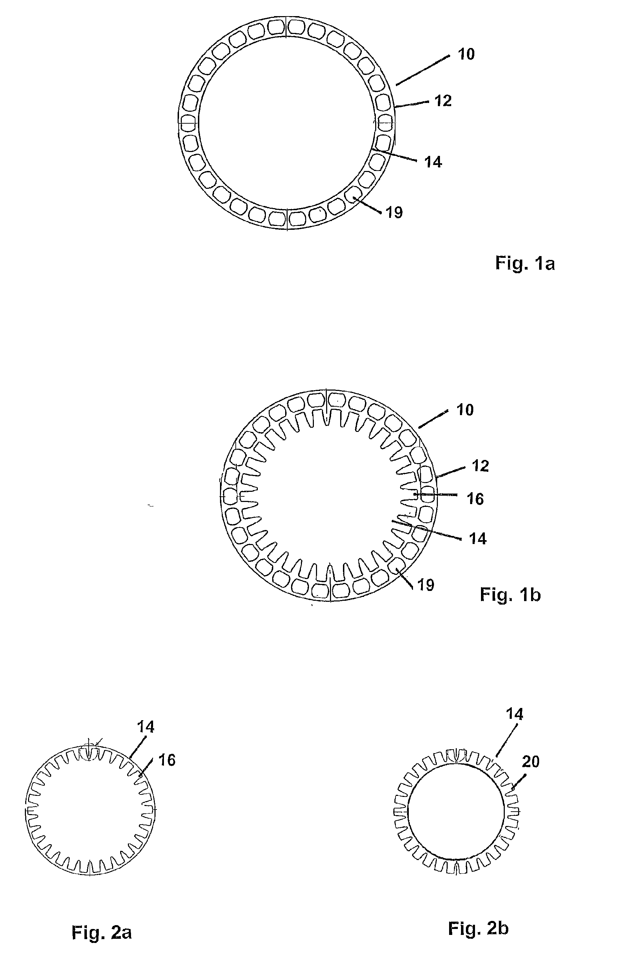

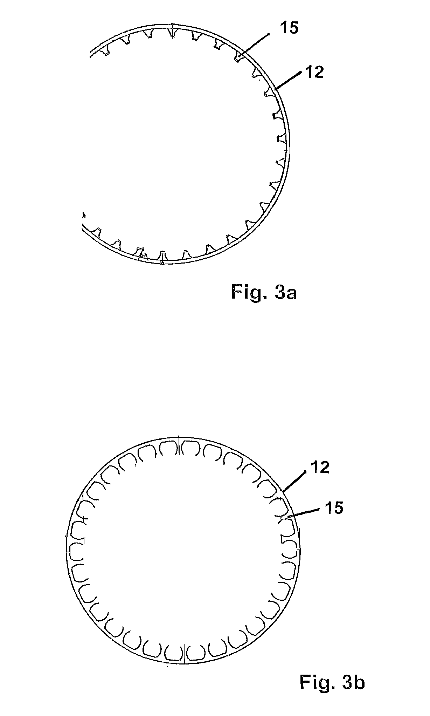

In Fig. 1a ist schematisch ein Querschnitt durch eine Ausführungsform erfindungsgemäßer doppelwandiger Rohre 10 gezeigt. Schematisch sind innen verlaufende Kanäle 19 und glatte Außenwände12, 14 eines Rohrmantels 11 dargestellt. Die Kanäle 19 der Fig. 1a können auf verschiedene Art und Weise hergestellt worden sein: ein Innenrohr 14 mit Außenrippen (Fig. 2b) wird in ein glattes Außenrohr 12 (Fig. 3a) gebracht und dann mittels IHU das Innenrohr 14 an das Außenrohr 12 gepreßt, so daß die Rippen des Innenrohrs 12 mit der Außenrohrinnenwand abschließen und so die Kanäle 19 bilden. Es ist aber auch möglich, ein Außenrohr 12 mit Innenrippen (Fig. 3b) vorzulegen und in dieses ein glattes Innenrohr 14 einzubringen, das anschließend durch IHU gegen das Außenrohr 12 gepreßt wird. Auch dabei bilden sich Kanäle zwischen den Rippen des Außenrohrs 12 und der Innenrohr-Außenwand. Schließlich können auch ein Außenrohr 12 mit Innenrippen 15 (Fig. 3a) und ein Innenrohr 14 mit Außenrippen (Fig. 2b) ineinandergesteckt und sodann das Innenrohr 14 aufgeweitet werden, wodurch ebenfalls Kanäle 19 zwischen den Rippen und den Rohrwänden entstehen.

In Fig. 1b ist eine Ausführungsform gezeigt, bei der das Innenrohr 14 auch Innenrippen aufweist. Diese Innenrippen verlaufen im Rohrinneren und können sowohl zur Lenkung des im Innenrohr 14 laufenden Fluids als auch zur besseren Wärmeübertragung an die Rohrwände dienen. Die Herstellung des Rohrs 10 der Fig.1b entspricht derjenigen des Rohrs 10 der Fig. 1a, wobei bspw. als Innenrohr ein solches mit Rippen auf der Rohrinnenwand eingesetzt wird, wie in Fig. 2a gezeigt.

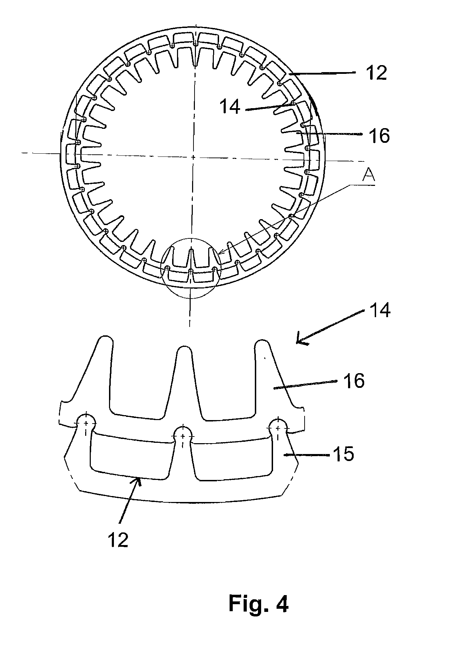

In Fig. 4 ist ein Längsschnitt durch ein weiteres doppelwandiges Rohr gern. Fig. 1b gezeigt. Man erkennt die hier Kanäle 19, welche durch ein Außenrohr mit Innenerhebungen, wie in Fig. 2a gezeigt, und ein Innenrohr mit Vetiefungen auf der Außenseite und Erhebungen in Richtung des Rohrinneren gebildet ist. Es ist deutlich in der Detaildarstellung der Fig. 4 gezeigt, daß die Erhebungen des Außenrohrs 12 in die rillenartigen Vertiefungen am Äußeren des Innenrohrs 14 eingreifen.

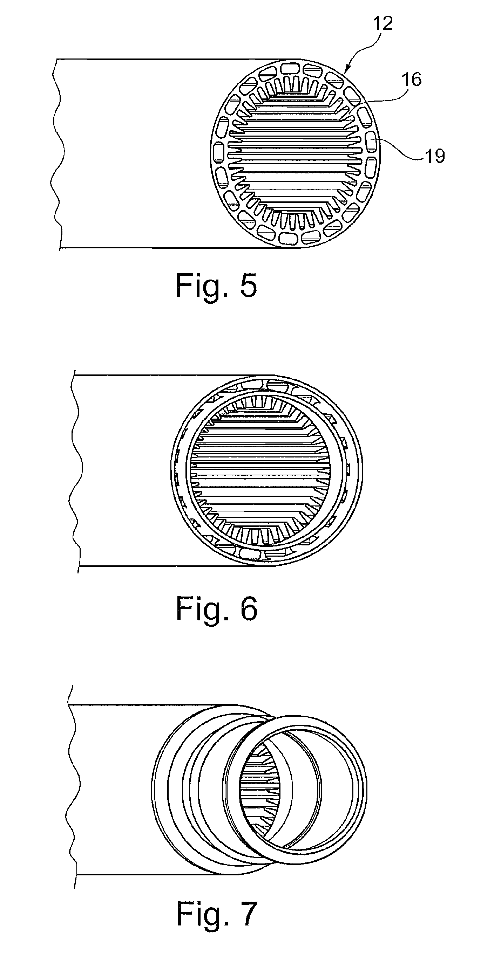

Fig. 5 zeigt perspektivisch einen Querschnitt durch ein doppelwandiges Rohr der Fig. 1b, wobei die Innenrippen deutlich erkennbar sind.

Dieses doppelwandige Rohr 10 der Fig. 5 eignet sich insbesondere als Wärmetauscher, bei dem ein hoher Wärmeabfluß über einen kurzen Gasweg erwünscht ist, um den nachgeschalteten Katalysator nicht zu schädigen; aber auch als Heizungs- bzw. Kühlrohr, wie dem Fachmann bekannt.

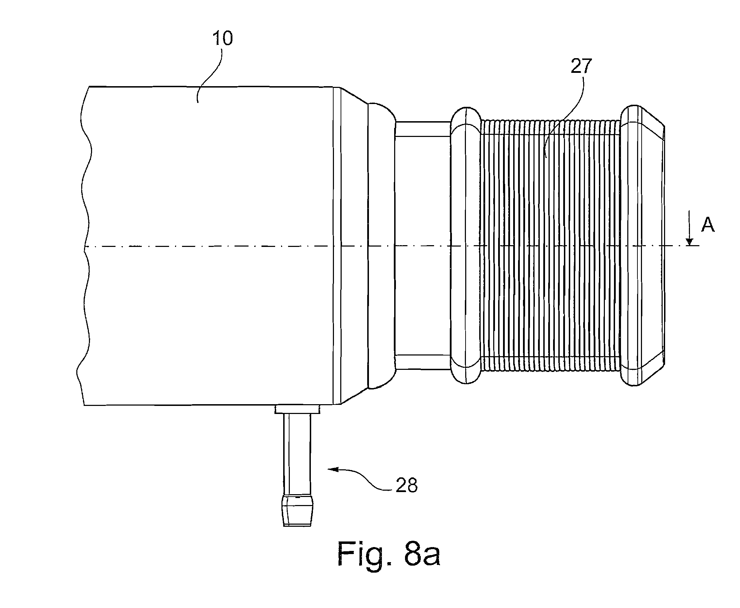

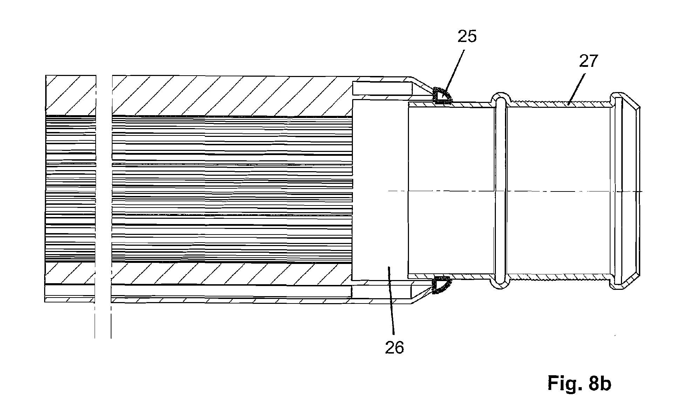

Dieses Rohr der Fig. 5 kann nun mit einem Anschlußteil für Schläuche und sonstige Leitungen versehen werden, indem die Kanalwände im Endbereich des doppelwandigen Rohrs eingedrückt werden und die beiden Rohrwände 12, 14 miteinander im Endbereich verbunden werden - bspw. durch Schweißen (Schweißnaht 25) oder Löten (s. Fig. 8b ). Dadurch entstehen abgeschlossene Kanäle 11 im Rohrmantel 11, die in einem Sammelbereich 26 enden. In den/die Sammelbereich/e 26 wird - bei dieser Ausführungsform rechtwinkelig zur Rohrerstreckungsrichtung - eine Verbindungskomponente 28 eingebracht, um Fluid in die Kanäle 19 ein- und daraus abzuführen. Dabei kann das Fluid im Gegenstrom oder aber ggf. auch Gleichstrom geführt werden. Durch die Herstellung eines Sammelbereichs im Wärmeaustauschrohr kann ein aufwendiges Anschließen spezieller Anschlußteile am doppelwandigen Rohr vermieden und die Baugrösse der Einheit verringert werden.

Nachfolgend werden bevorzugte Verfahren zur Herstellung eines erfindungsgemäßen doppelwandigen Rohrs erläutert.

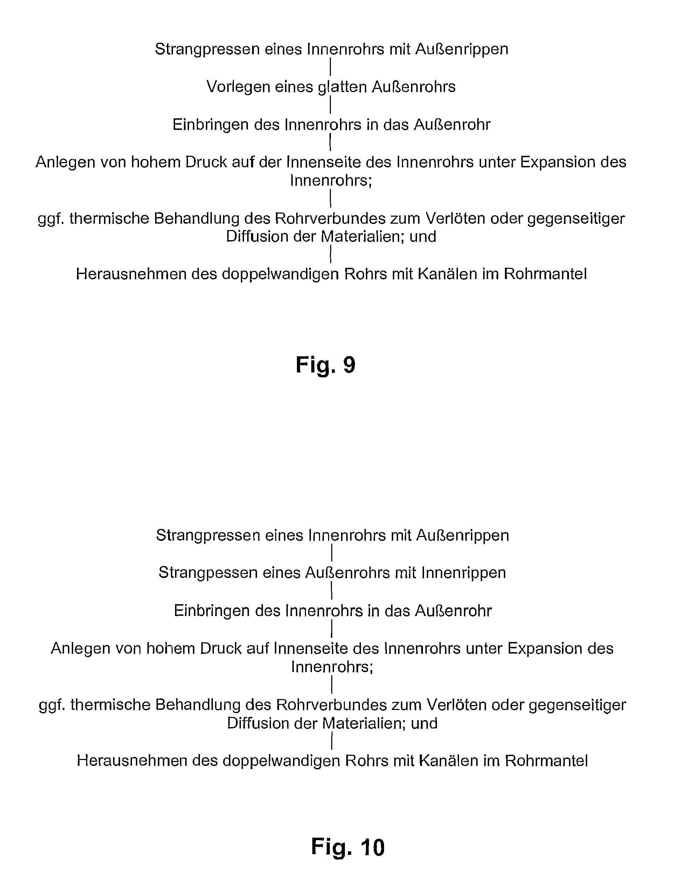

Wie in Fig. 9 im Flußdiagramm als Verfahrensablauf dargestellt, wird zunächst ein Innenrohr mit Außenrippen 20 in üblicher Weise stranggepreßt. Auf dieses Innenrohr 14 wird ein glattes Außenrohr 12' geschoben, die Anordnung in eine IHU-Form verbracht und sodann Hochdruck auf die geschlossene Innenwand des Innenrohrs 14 ausgeübt, bis das Innenrohr 14 auf der Innenwand des Außenrohrs 12' dicht anliegt - ggf. unter Verformung des/der Materialien. Danach wird die so hergestellte Anordnung durch Erwämen in einem Ofen verbunden - ggf. können auf den Rippen und/oder der Aussenwand des Innenrohrs Lotmaterialien aufgebracht sein, um die Verbindung zu verbessern. Es ist aber auch möglich, in der Außenwand des Innenrohrs 14' rillenartige Vertiefungen (s. Fig. 4) auszubilden, um die Verbindung zwischen den Rippen und dem Innenrohr 14' zu erleichtern.

In Fig. 10 ist ein weiteres Ausführungsbeispiel für die Herstellung eines doppelwandigen Rohrs gemäß der Erfindung schematisch in Form eines Flußdiagramms gezeigt. Dabei wird ein Innenrohr 14' mit Außenrippen 20 mit einem Außenrohr mit Außenrippen kombiniert; Innen- und Außenrohr werden ineinandergesteckt und dann in einer IHU-Form durch Anlegen von Hochdruck auf die Innenseite des Innenrohrs 14' letzteres expandiert und somit mit dem Außenrohr 12' verbunden. Es kann auch bei dieser Ausführungsform ggf. ein Schritt zum Verbinden der beiden Teile durchgeführt werden, wie Löten im Ofen, Diffusionsverbinden oder dergleichen.

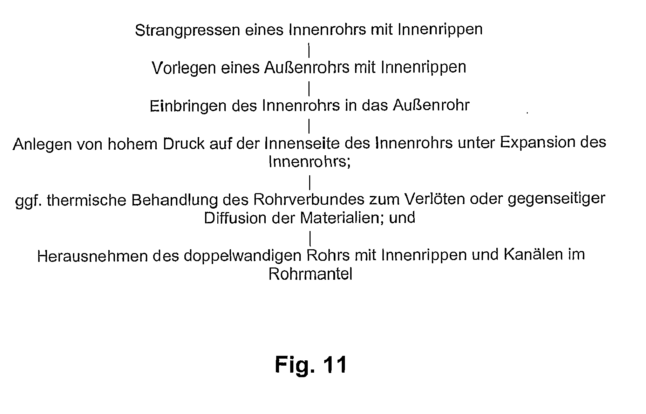

Wie in Fig. 11 gezeigt, können beliebig hergestellte doppelwandige Rohre mit Anschlüssen für Fluide im Mantel 11 und im Rohrinneren versehen werden. Dazu werden in einem ein- oder mehrteilig hergestellten doppelwandigen Rohr mit Kanälen 19 im Rohrmantel 11 die Kanalwände in dem jeweiligen Endbereich entfernt (s. Fig. 6 ). Dies kann bspw. durch Schneiden, Bohren erzielt werden - entsprechende Verfahren sind dem Fachmann geläufig. Dadurch entsteht ein Mantelfluidsammelraum 26, wenn die Mantelwände an den Endbereichen fluiddicht miteinander verbunden sind - bspw. durch Verlöten 25 oder Zusammenfalzen, falls die Wanddicken dies erlauben. Am Mantelfluidsammelraum 26 wird ein Mantelfluidanschluss 28 angebracht, der zur Zu- bzw. Abführung von Mantelfluid dient. Für das Rohrfluid, das im Inneren des Rohrs in Wärmeaustausch mit dem Mantelfluid geführt wird, wird ein Rohrfluidanschlußteil 27 am Rohrende angebracht. Durch diese nachgeschalteten Verfahrensschritte kann das erfindungsgemäße doppelwandige Rohr für Wärmeaustausch eingerichtet werden.

Allgemein ist festzustellen, daß die Herstellung insbesondere gebogener doppelwandiger Rohre durch das IHU-Verfahren stark erleichtert bzw. erst ermöglicht wird und speziell durch die zweiteilige Herstellung verschiedene Materialkombinationen ermöglicht werden. Die Herstellung von Sammelräumen im doppelwandigen Rohr selbst durch Entfernen von Kanalwänden im Sammelraumbereich und Verbinden von Außen- und Innenwand ermöglicht eine schnellere und unproblematische Führung von Fluiden durch die Kanäle bei geringer Baugröße.

Während bevorzugte Ausführungsformen der Erfindung ausführlich beschrieben wurden, sind für den Fachmann, an den sich diesen Erfindung wendet, verschiedenste alternative Entwürfe und Ausführungsformen zur Durchführung der Erfindung ersichtlich, wie von den beigefügten Ansprüchen definiert.

### Bezugszeichenliste

- 10: Rohrleitung
- 11: Rohrmantel
- 12: Außenwand
- 12': Außenrohr
- 14: Innenwand
- 14': Innenrohr
- 15: Erhebung auf Außenrohr, innen
- 16: Erhebung auf Innenrohr, innen
- 19: Kanäle zwischen 12 und 14
- 20: Erhebung auf Innenrohr - außen
- 22: Rohrleitung mit Kühlkanälen in Doppelwand
- 24: Rohrleitung m. Kühlkanälen in Doppelwand u. Wärmeübertragungsrippen innen
- 25: Schweißnaht zwischen 12 und 14
- 26: Mantelfluidsammelraum
- 27: Anschlußteil für Rohrfluid
- 28: Verbindungskomponente für Mantelfluid
- 30: Verfahren zur Herstellung von 22
- 32: Verfahren zur Herstellung von 26
- 34: Verfahren zur Herstellung von 28

## Patentansprüche

1. Doppelwandiges Rohr (10) mit:
einem Rohrmantel (11) mit einer Außenwand (12) und einer Innenwand (14) sowie dazwischen parallel zueinander verlaufenden Kanälen (19), wobei der Rohrmantel (11) aus einem Außen- und einem Innenrohr besteht, von denen mindestens eines in Rohrinnenrichtung Erhebungen (15, 16) aufweist, wobei durch Übereinanderliegen derselben parallel verlaufenden Mantelkanäle gebildet (19) sind.

2. Doppelwandiges Rohr mit Kanälen (19) im Rohrmantel (11), **dadurch gekennzeichnet, daß** in mindestens einem Endbereich des doppelwandigen Rohrs die Kanalwände unter Ausbildung eines Sammelraums (26) fehlen, in den die Mantelkanäle (19) münden, wobei der Rohrmanteldurch Verbinden von Außen- und Innenrohr (12',14') am Rohrende geschlossen ist; wobei am Sammelraum (26) ein Fluidzugang (28) ausgebildet ist.

3. Doppelwandiges Rohr (10) nach Anspruch 1 oder 2, **dadurch gekennzeichnet, dass** das Innenrrohr (12) an seiner Innenseite Erhebungen (15) aufweist, die sich in das Rohrinnere erstrecken.

4. Doppelwandiges Rohr nach einem der vorangehenden Ansürüche, **dadurch gekennzeichnet, daß** Innen- oder Außenrohr in Richtung der Kanäle rillenartige Vertiefungen zur Aufnahme von Erhebungen (15,16) des jeweils anderen Rohrs aufweist.

5. Doppelwandiges Rohr (10) nach Anspruch 1, **dadurch gekennzeichnet, dass** das Innen- (14) und Außenrohr (12) jeweils ausgewählt ist aus der Gruppe bestehend aus: Rohren mit innenliegenden Erhebungen (15), Rohren mit außenliegenden Erhebungen (20) und Rohren mit Innen- und Außenerhebungen.

6. Doppelwandiges Rohr (10) nach einem der vorangehenden Ansprüche, **dadurch gekennzeichnet, daß** es ausgewählt ist aus der Gruppe bestehend aus:
doppelwandiges Rohr mit Kanälen (19) im Rohrmantel mit glatter Innen- und
Außenwand und doppelwandiges Rohr mit Kanälen (19) mit Innenoberfläche (16) mit Erhebungen und glatter Außenwand.

7. Doppelwandiges Rohr nach einem der vorangehenden Ansprüche, **dadurch gekennzeichnet, dass** es im wesentlichen hergestellt ist aus duktilem Material, ausgewählt aus der Gruppe bestehend aus: Metall-Legierungen, KupferLegierungen, Eisen-Legierungen, Leichtmetall-Legierungen, alle vorgenannten auch oberflächenbehandelt, oberflächenbeschichtet.

8. Doppelwandiges Rohr nach einem der vorangehenden Ansprüche, **dadurch gekennzeichnet, dass** das Innen- (14) und Außenrohr (12) aus verschiedenem Material bestehen.

9. Verfahren zur Herstellung eines doppelwandigen Rohrs, **dadurch gekennzeichnet, daß** ein rohrartiges doppelwandiges Strangpreßprofil durch Innenhochdruckumformen bedarfsgerecht zu einem geformten doppelwandigen Rohr geformt wird.

10. Verfahren zur Herstellung eines doppelwandigen Rohrs nach Anspruch 8, **dadurch gekennzeichnet, dass** in ein Außenprofilrohr ein Innen-Profilrohr eingebracht wird, die Anordnung in eine IHU-Form eingelegt und mittels IHU das Außenrohr an die Werkzeugkontur angelegt wird; ggf. Verbinden der Kontaktbereiche durch Hartlöten und Entformen des doppelwandigen Rohrs.

11. Verfahren nach Anspruch 9, **dadurch gekennzeichnet, dass** ein Innenrohr mit Außenprofil gerichtet im Außenrohr mit Innenprofil so eingelegt wird, dass beim IHU-Umfomen Erhebungen auf einem Rohr in Vertiefungen im anderen Rohr dichtend eingedrückt werden.

12. Verfahren nach Anspruch 8-10, **dadurch gekennzeichnet, daß** in mindestens einem Endbereich des doppelwandigen Rohrs die Kanäle durch Herausnehmen/Verformen der Kanalwände miteinander zu einem Anschlußbereich verbunden werden,
der Rohrmantel durch Verbinden von Außen- und Innenrohr am Rohrende geschlossen wird und
am Sammelraum ein Fluidzugang ausgebildet wird.

13. Verfahren nach Anspruch 11, **dadurch gekennzeichnet, daß** eine Anschlußkomponente für Rohrfluid im Endbereich des doppelwandigen Rohrs befestigt wird.

14. Verwendung des doppelwandigen Rohrs nach einem der vorangehenden Anspruche als Wärmetauscherrohr, Heiz- oder Kühlrohr.
